# EUROPÄISCHE PATENTSCHRIFT

(11) **EP 2 507 855 B1**
(45) Veröffentlichungstag und Bekanntmachung des Hinweises auf die Patenterteilung: **03.04.2019**
(21) Anmeldenummer: 10763372.9
(22) Anmeldetag: 11.10.2010
(51) Int. Cl.: H01M 2/34, H01M 10/48, H01H 39/00

(54) **BAUELEMENT FÜR EINE BATTERIEANORDNUNG MIT ELEKTRISCH TRENNBARER LEITERBAHN**
COMPONENT ARRANGEMENT FOR A BATTERY WITH ELECTRIC SEPARABLE CONDUCTOR
COMPOSANT POUR UNE BATTERIE AVEC CONDUCTEUR DÉBRANCHABLE

(30) Priorität: 03.12.2009 DE 102009047439
(43) Veröffentlichungstag der Anmeldung: 10.10.2012
(73) Patentinhaber: Robert Bosch GmbH, 70442 Stuttgart (DE)
(72) Erfinder: NEUL, Reinhard, 70567 Stuttgart (DE); BISCHOPINK, Georg, 72124 Pliezhausen (DE); LAERMER, Franz, 71263 Weil Der Stadt (DE); SCHUMANN, Bernd, 71277 Rutesheim (DE); KRONMUELLER, Silvia, 71409 Schwaikheim (DE)
(86) Internationale Anmeldenummer: PCT/EP2010/065209
(87) Internationale Veröffentlichungsnummer: WO 2011/067023

(56) Entgegenhaltungen:
- DE-A1- 3 712 404
- DE-A1- 19 819 943
- DE-A1-102008 010 971
- US-A1- 2009 251 100

## Beschreibung

Die Erfindung betrifft ein Bauelement, insbesondere für eine Batterieanordnung, mit dem eine Leiterbahn als elektrische Verbindung auf einfache Weise durch gezielte Auslösung eines Sprengsatzes getrennt werden kann.

### Stand der Technik

Batterien für Elektrofahrzeuge (HEV Hybrid Elektric Vehicles und FEV Full Elektric Vehicles) bestehen aus mehreren einzelnen Batteriezellen, die seriell und/oder parallel miteinander verschaltet sind.

Der Ausfall einer oder mehrerer Batteriezellen kann die Funktion einer gesamten Batterie beeinträchtigen. Der Ausfall von Batteriezellen kann weiterhin zum kompletten Ausfall einer Batterie führen oder im schlimmsten Fall sogar ein Sicherheitsrisiko darstellen. Um diese negativen Einflüsse zu vermeiden, müssen defekte Zellen möglichst rückwirkungsfrei von der Gesamtbatterie abgetrennt werden, so dass idealer Weise nur noch eine anteilige Kapazitätseinbuße durch die nicht mehr zur Verfügung stehenden Zellen zum Tragen kommt. Bei den bekannten Halbleiterschaltern ist nachteilig, dass Spannungsabfälle durch Diodenstrecken, Sättigungsspannungen und /oder Kanalwiderstände und damit erhebliche elektrische Verluste auftreten können.

DE 37 12 404 A1 offenbart eine Vorrichtung gemäß dem bisherigen Stand der Technik..

### Offenbarung der Erfindung

Erfindungsgemäß wird ein Bauelement, insbesondere für eine Batterieanordnung vorgeschlagen, welches mindestens eine Leiterbahn auf einem Substrat umfasst, wobei die Leiterbahn mittels einer auf oder in dem Substrat angeordneten pyrotechnischen Ladung und einer mit dieser pyrotechnischen Ladung funktionell verbundenen Auslöseeinrichtung elektrisch trennbar ist.

Erfindungsgemäß wird mit anderen Worten damit ein Bauelement bereitgestellt, mit dem eine Leiterbahn als elektrische Verbindung auf einfache Weise durch gezielte Auslösung eines Sprengsatzes irreversibel getrennt werden kann. Die Leiterbahn kann erfindungsgemäß dabei explosionsartig oder durch Aufschmelzen getrennt werden.

Erfindungsgemäß ist auf dem Substrat des Bauelements, oder auch separiert davon, eine zusätzliche Überbrückungseinrichtung angeordnet. Unter Überbrückungseinrichtung wird erfindungsgemäß eine Einrichtung verstanden, mit der eine vorher nicht vorhandene elektrische Verbindung geknüpft werden kann. Durch den Einsatz eines erfindungsgemäßen Bauelements können vorteilhafterweise, defekte Batteriezellen im Wesentlichen rückwirkungsfrei von einer Gesamtbatterie abgetrennt werden. Durch die Überbrückung der getrennten Leiterbahn kann vorteilhafterweise erfindungsgemäß nur noch eine anteilige Kapazitätseinbuße, durch die nicht mehr zur Verfügung stehenden Zellen zum Tragen kommen.

Die Überbrückungseinrichtung umfasst erfindungsgemäß mindestens eine Diode, bevorzugt eine Schottkydiode. Gleichzeitig mit der elektrischen Trennung der Leiterbahn kann die Diode leitend werden und so den weiteren Stromfluss in einem Batteriestrang ermöglichen. Die Diode kann dabei in ihrem normalen Durchlassbereich betrieben werden oder sie kann so dimensioniert sein, dass sie in diesem Fall durchlegiert und zum ohmschen Kontakt mit niedrigerem Spannungsabfall werden kann.

Die Leiterbahn kann erfindungsgemäß beispielsweise die Hauptstromverbindung einer Batteriezelle sein. Diese Hauptstromverbindung kann zweckmäßigerweise so ausgelegt sein, dass sie den jeweils vorgesehenen Betriebsstrom tragen kann, ohne sich übermäßig zu erwärmen. Dies kann eine ungewollte Zündung der pyrotechnischen Ladung verhindern.

In einer Ausgestaltung der Erfindung kann die Leiterbahn eine mechanische Vorspannung aufweisen. Die Trennbarkeit der Leiterbahn durch die pyrotechnische Ladung kann hierdurch vorteilhafterweise unterstützt und erleichtert werden.

Das Substrat bildet dabei den Träger der Leiterbahn und kann erfindungsgemäß zusätzlich zur Leiterbahn ein Volumen, beispielsweise eine poröse Struktur, umfassen, die ein Mittel aufnehmen oder beinhalten kann, welches auf einen Zündimpuls reagiert. Dieses Mittel wird erfindungsgemäß als pyrotechnische Ladung bezeichnet. Das Volumen oder der es umgebende Raum auf oder im Substrat umfasst zweckmäßigerweise eine Auslöseeinrichtung, erfindungsgemäß auch Zünder genannt, welcher elektrisch, thermisch und/oder durch Druck aktiviert werden kann.

Die pyrotechnische Ladung kann ein zu entzündendes Mittel, wie allgemein ein energetisches Material, ein Oxidationsmittel und ein zu oxidierenden Stoff, ein sich selber oxidierender Stoff, ein auch ohne Sauerstoff mit sich selber reagierendes Mittel sein. Die pyrotechnische Ladung kann einen organischen oder anorganischen Stoff beinhalten oder auch eine Stoffmischung. Stoffklassen dieser Art sind bekannt.

Batteriezellen sind regelmäßig irreversibel defekt und können daher auch vorteilhafterweise mit dem erfindungsgemäß vorgeschlagenen irreversiblen Prozess von einer Gesamt-Batterieanordnung elektrisch abgetrennt werden. Ein Vorteil gegenüber den sonst üblichen Halbleiterschaltern ist die Vermeidung von Spannungsabfällen durch Diodenstrecken, Sättigungsspannungen und/oder Kanalwiderständen und damit die Minimierung von elektrischen Verlusten.

In einer anderen Ausgestaltung des erfindungsgemäßen Bauelements kann die Auslöseeinrichtung einen elektrischen Auslöser, insbesondere eine elektrische Zündleitung umfassen. Die elektrische Zündleitung kann dazu benutzt werden, um durch einen relativ geringen Steuerstrom lokal eine hohe Temperatur und damit Zündung der pyrotechnischen Ladung auszulösen.

In einer Ausführungsform des erfindungsgemäßen Bauelements kann der Stoff oder die Stoffmischung für die pyrotechnische Ladung ausgewählt werden aus Metallen oder Halbleitern, wie Aluminium, Zirkon, Magnesium oder allgemein einem brennbaren Metall und brennbaren Halbleitern, wie Silizium, Kohlenstoff, Schwefel und Schwefelverbindungen. Es können auch Verbindungen mit Stickstoff, sowie Stickstoff-haltige Polymere, wie Stickstoff-Wasserstoff- oder Metall-Stickstoff-Verbindungen und/oder ihre Nitrate oder Nitroester, wie Guanidinnitrat, Nitroester von Alkoholen wie Nitroglyzerin, oder Nitroester und nitrierte Polyalkohole und Oligoalkohole mit Nitroestergruppen, wie reaktive energetische Binder, beispielsweise Glyzidylazid Polymer (GAP) und verwandte Polymere eingesetzt werden. Ebenso können Stoffe der Nitraminklasse, wie sie in HMX und RDX und diesen Klassen oder Polymeren daraus beinhaltet sein, wie Nitropolymere oder Nitraminpolymere oder auch Nitrozellulosen, Nitroguanidine, Polymere mit nichtenergetischen Verbindungen wie Polyurethane oder Polybutadiene oder allgemein polymere Binder wie auch Zellulosen und Polyalkylbutyrale für die pyrotechnische Ladung verwendet werden. Es können auch Nitrate, Ammoniumnitrat, Metall- und Ammoniumperchlorate eingesetzt werden. Auch können darin wiederum Metallperoxide, wie Zinkperoxid oder andere Peroxide, sowie organische Peroxide eingesetzt werden. Die vorstehende Aufzählung ist beispielhaft und stellt keine abschließende Aufzählung dar.

In einer anderen Ausgestaltung kann die pyrotechnische Ladung auch in zwei übereinander liegenden Schichten von unterschiedlichen Stoffen oder Stoffmischungen angeordnet sein. Bevorzugt kann die obere, das heißt die nach außen gerichtete, Schicht einen besonders dichten, insbesondere gas- und feuchtedichten Abschluss und somit eine Sperrschicht bilden. Dieser so gebildete Umweltabschluss ist aus Korrosionsschutzgründen besonders vorteilhaft. Insbesondere kann auch eine zweite Schicht aus einer weiteren Sperrschicht und einer oder mehreren weiteren Schichten und Atomic-Layer deponierten Sperrschichten bestehen, die gasdichte Metalloxide oder Nitride oder Carbide daraus enthalten. Solche Schichten sind beispielsweise auch aus der Abdichtung von Solarzellen gegen Umwelteinflüsse bekannt.

In einer Ausgestaltung des erfindungsgemäßen Bauelements kann das Substrat ein Chip, insbesondere ein Siliziumwafer sein.

Zur Herstellung des erfindungsgemäßen Bauelements kann in einer Ausführungsform zunächst auf einem solchen Siliziumwafer ganzflächig eine Isolationsschicht, zum Beispiel ein Isolationsoxid, wie Siliziumoxid, abgeschieden werden. Alternativ kann durch thermische Oxidation ein thermisches Siliziumoxid aufgewachsen werden. Danach kann ebenfalls ganzflächig ein Metall, zum Beispiel Aluminium, eine Aluminiumlegierung, oder ein anderes elektrisch leitfähiges Metall oder eine Abfolge von Metallschichten abgeschieden werden und zu entsprechenden Leiterbahnen, also Leiterbahnen, insbesondere die elektrische Verbindung von Batteriezellen und Zündleiterbahnen, strukturiert werden. Über den Leiterbahnen wird eine Passivierschicht abgeschieden. Als Passivierschicht kann beispielsweise, wie in der Halbleiterindustrie als Metallpassivierungsschicht gebräuchlich, eine Siliziumnitridschicht eingesetzt werden. Danach kann das Siliziumnitrid so strukturiert werden, dass eine Öffnung, erfindungsgemäß auch Fenster genannt, zum Isolationsoxid und nachfolgend durch die Isolationsschicht hindurch bis zum Silizium entstehen kann. Dem Übergang von Siliziumnitrid zum Isolationsoxid kann beim Fensterätzen durch entsprechende Anpassung der Prozessparameter beziehungsweise der Ätzprozesschemie Rechnung getragen werden. Anschließend kann durch das angelegte Fenster zum Silizium in einer flusssäurehaltigen Lösung elektrochemisch, das heißt unter Bestromung des Siliziumwafers bei anodischer Polung der Wafervorderseite zum Flusssäureelektrolyten hin, eine Umwandlung von Silizium in poröses Silizium durchgeführt werden. Dies kann im Sinne einer Unterätzung des Dielektrika-/Metallaufbaus darüber geschehen. Zuletzt kann die derart erzeugte schwammartige poröse Silizium-Struktur, erfindungsgemäß auch PorSi-Struktur genannt, mit einem Oxidationsmittel, wie. Kaliumnitrat, Kaliumchlorat, Kaliumperchlorat, ein Peroxid, ein Permanganat, Dichromat usw. in gelöster Form gefüllt und getrocknet werden. Danach kann die Öffnung bei Bedarf auch wieder verschlossen werden.

Die verschiedenen vorstehend beschriebenen Ausführungsformen können einzeln oder gegebenenfalls in Kombination miteinander realisiert werden.

Erfindungsgemäß umfasst ist auch eine Batterieanordnung, die ein erfindungsgemäßes Bauelement in einer vorstehend beschriebenen Ausführungsform oder gegebenenfalls Kombinationen daraus enthält. Die Batterieanordnung, enthaltend ein erfindungsgemäßes Bauelement, kann dabei insbesondere für ein Elektrofahrzeug eingesetzt werden.

Die Erfindung umfasst weiterhin eine Batterieanordnung, insbesondere für ein Elektrofahrzeug, umfassend zwei oder mehrere Batteriezellen, die seriell und/oder parallel elektrisch miteinander unter Bildung von Batteriesträngen verschaltet sein können, wobei die Batterieanordnung mindestens
∘ eine Überwachungseinrichtung zur Identifizierung defekter Batteriezellen,
∘ mindestens eine elektrische Leiterbahn als elektrische Verbindung einer Batteriezelle,
∘ mindestens eine pyrotechnische Ladung zur irreversiblen Trennung der elektrischen Leiterbahn der defekten Batteriezelle,
∘ eine Auslöseeinrichtung für die pyrotechnische Ladung.
∘ und weiterhin die Batterieanordnung eine Überbrückungseinrichtung für elektrisch abgetrennte Batteriezellen umfasst.

Vorteilhafterweise können mit der erfindungsgemäßen Batterieanordnung defekte Batteriezellen rückwirkungsfrei aus der Gesamtbatterie abgetrennt werden. Durch die erfindungsgemäß vorgesehene Überbrückungseinrichtung kann die Lücke, die durch die irreversible Abtrennung der defekten Batteriezelle entsteht, im betroffenen Batteriestrang geschlossen werden. Es wird mit anderen Worten an einer anderen Stelle eine neue elektrische Verbindung geknüpft, die die Lücke überbrücken kann. Vorteilhafterweise kommt erfindungsgemäß idealerweise nur noch die anteilige Kapazitätseinbuße durch die nicht mehr zur Verfügung stehenden Zellen zum Tragen. Weiterhin können Spannungsabfälle durch Diodenstrecken, Sättigungsspannungen und/oder Kanalwiderstände erfindungsgemäß vermieden werden. Vorteilhafterweise kann somit eine Minimierung der elektrischen Verluste erzielt werden. Insgesamt kann darüber hinaus die Standzeit einer Batterie deutlich verlängert werden, da erfindungsgemäß die Beeinträchtigung durch defekte Zellen schnell und effektiv beseitigt werden können.

Die Überwachungseinrichtung identifiziert defekte Batteriezellen und kann dann ein entsprechendes Signal, gegebenenfalls an eine separate Auslöseeinrichtung, senden und die pyrotechnische Ladung hierdurch zünden und die zugeordnete Leiterbahn trennen. Hierdurch kann die betreffende Zelle von der Gesamtbatterie elektrisch abgetrennt werden. Zur Überwachung kann beispielsweise die Messung der Spannung und/oder die Temperatur, gegebenenfalls mit einem separaten Messelement, und gegebenenfalls des Stroms über den Widerstand der trennbaren Leiterbahn verwendet werden. Der Strom kann jedoch für jede Batteriezelle in einem Batteriestrang gleich sein und es ist daher möglich auch einmal in jedem Batteriestrang eine solche Überwachungsmessung durchzuführen. Auch die Impedanz der Batteriezellen und/oder der zeitliche Verlauf der jeweiligen vorstehend genannten Messgrößen kann zur Batteriezellenüberwachung eingesetzt werden.

In einer Ausgestaltung der Batterieanordnung können die pyrotechnische Ladung und die Überbrückungseinrichtung auf und/oder in einem Substrat angeordnet sein.

Erfindungsgemäß kann in einer anderen Ausgestaltung vorgesehen sein, die Auslöseeinrichtung in der Überwachungseinrichtung zu integrieren. Hierdurch kann vorteilhafterweise eine Verkürzung der Signal- und Strompfade erzielt werden.

Erfindungsgemäß wird weiterhin ein Verfahren zum verbesserten Betrieb einer Batterieanordnung, insbesondere für ein Elektrofahrzeug, umfassend mehrere Batteriezellen, die seriell und/oder parallel zu Batteriesträngen zusammengeschaltet sind, bereitgestellt, umfassend die Schritte
D) Identifizierung defekter Batteriezellen
E) Abtrennung der defekten Batteriezellen durch irreversibles Trennen mindestens einer stromtragenden Leiterbahn der defekten Batteriezelle mittels Auslösung einer pyrotechnische Ladung,
F) Überbrücken des getrennten Strompfades des Batteriestrangs mittels einer Überbrückungseinrichtung.

Vorteilhafterweise können mit dem erfindungsgemäßen Verfahren defekte Batteriezellen rückwirkungsfrei aus einer Gesamtbatterie abgetrennt werden. Durch die erfindungsgemäß vorgesehene Überbrückungseinrichtung kann die Lücke, die durch die irreversible Abtrennung der defekten Batteriezelle entsteht, im betroffenen Batteriestrang geschlossen werden. Vorteilhafterweise kommt erfindungsgemäß idealerweise nur noch die anteilige Kapazitätseinbuße durch die nicht mehr zur Verfügung stehenden Zellen zum Tragen. Vorteilhafterweise ist es mit dem erfindungsgemäßen Verfahren außerdem möglich, die Standzeit einer Batterie deutlich zu verlängern. Spannungsabfälle durch Diodenstrecken, Sättigungsspannungen und/oder Kanalwiderstände können erfindungsgemäß vermieden werden. Gleichzeitig kann daher eine Minimierung elektrischer Verluste erzielt werden.

Die Erfindung wird nachfolgend in Verbindung mit den Figuren näher erläutert, ohne auf die gezeigten Ausgestaltungen beschränkt zu sein. Gleiche Komponenten sind dabei mit gleichen Bezugszeichen gekennzeichnet.

Es zeigen:
Figur 1 eine schematische Draufsicht auf ein erfindungsgemäßes Bauelement
Figur 2 eine schematische Querschnittansicht des in Figur 1 gezeigten Bauelements und
Figur 3 einen schematischen Schaltplan einer erfindungsgemäßen Batterieanordnung.

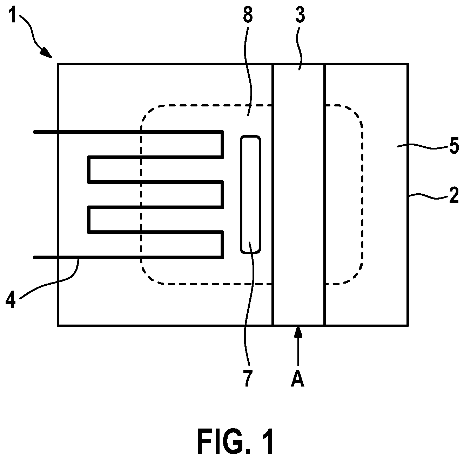

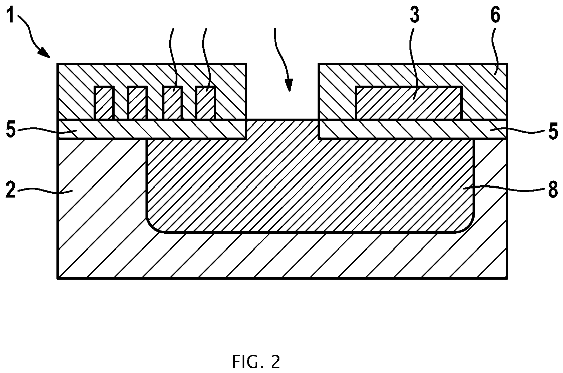

Figur 1 zeigt eine schematische Draufsicht einer Ausführungsform eines erfindungsgemäßen Bauelements 1. Das Bauelement umfasst ein Substrat 2, das beispielsweise als Chip, insbesondere als Siliziumwafer ausgeführt sein kann. Auf dem Substrat 2 als Träger ist eine Leiterbahn 3 als Strompfad angeordnet, die insbesondere die Hauptstromverbindung einer Batteriezelle sein kann. Auf dem Substrat ist zusätzlich eine elektrische Zündleitung 4 angeordnet. Eine Isolationsschicht 5 (siehe auch Figur 2) ist dabei unterhalb der Leiterbahn 3 und der Zündleitung 4 auf dem Substrat 2 angeordnet und isoliert diese zum Substrat hin. Mit einer in dieser Figur nicht gezeigten Passivierschicht 6 (siehe Figur 2), können die Leiterbahn 3 und die Zündleitung 4 vor Umgebungseinflüssen geschützt werden. Die Isolierschicht 5 und die Passivierschicht 6 können eine Öffnung 7 aufweisen, mittels derer in das Substrat 2 ein Volumen für die pyrotechnische Ladung 8 in das Substrat eingebracht werden kann. Zum Beispiel kann bei einem Siliziumwafer 2, mittels elektrochemischer Anodisierung ein Volumen von porösem Silizium erzeugt werden, das mit einem geeigneten Oxidationsmittel als pyrotechnische Ladung gefüllt werden kann. Passivierschicht 6 und Isolationsschicht 5 kann vorzugsweise in einem Bereich 7 zwischen der Leiterbahn 3 und der Zündleitung 4 geöffnet sein, um dem Ätzmedium der elektrochemischen Anodisierung den Zutritt zu gewähren, so dass die Erzeugung von porösem Silizium bis weit unter die elektrisch aktiven Leiterbahnen 3, 4 reichend ablaufen kann. Üblicherweise wird hierbei Flusssäure als Ätzmedium eingesetzt. Durch die Öffnung 7 kann nachfolgend auch das Oxidationsmittel in das poröse Silizium eingeführt werden. Dies kann beispielsweise durch Dispensen in gelöster Form oder Eintauchen des gesamten Siliziumwafers in die Lösung von Oxidationsmittel und anschließendem Trocknen durchgeführt werden. Nach dem Trocknen kann die Öffnung 7 bei Bedarf wiederum durch eine Lackschicht versiegelt oder durch eine Chipverpackung, wie zum Beispiel eine Plastik-Moldmasse wieder verschlossen werden.

Figur 2 zeigt eine schematische Querschnittansicht eines erfindungsgemäßen Bauelements 1. Auf der Oberfläche des Substrats 2 ist eine Isolierschicht 5 beispielsweise eine Siliziumoxidschicht aufgebracht, die die Leiterbahn 3 und die Zündleitung 4 gegen das Substrat 2 isoliert. Die Leiterbahn 3, die beispielsweise die Hauptstromverbindung einer Batteriezelle sein kann, ist im Vergleich zur Zündleitung relativ breit ausgelegt. Die Leiterbahn 3 wird zweckmäßigerweise so ausgelegt, dass sie den jeweiligen Betriebsstrom tragen kann, ohne sich übermäßig zu erwärmen. So kann vermieden werden, dass es hierdurch zu einer ungewollten Auslösung der pyrotechnischen Ladung 8 kommt, die im Substrat 2 unterhalb der Leiterbahn 3 und der Zündleitung 4 angeordnet ist. Die Zündleitung 4 hingegen ist so ausgestaltet, dass sie durch einen relativ geringen Steuerstrom lokal eine hohe Temperatur und damit zur Zündung des gesamten Volumens mit der pyrotechnischen Ladung 8 führen kann. Nach der Initiierung der pyrotechnischen Ladung 8 kann der gesamte darüber befindliche Aufbau aus Isolationsschicht 5, Passivierschicht 6, Zündleitung 4 und Leiterbahn 3 abgesprengt und insbesondere die Leiterbahn 3 unterbrochen werden. Hierdurch kann ein Hauptstrompfad, beispielsweise einer Batteriezelle, mechanisch und elektrisch irreversibel getrennt werden.

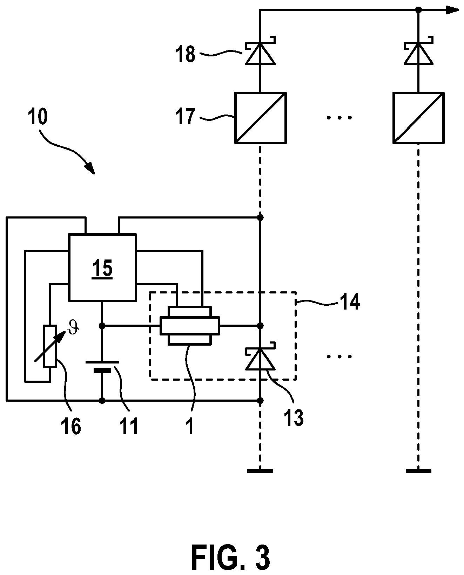

Figur 3 zeigt einen schematischen Schaltplan einer erfindungsgemäßen Batterieanordnung 10, umfassend ein erfindungsgemäßes Bauelement 1. Mehrere Batteriezellen 11 können in seriellen Strängen verbunden sein, die wiederum untereinander parallel geschaltet sein können. Die Überwachungseinrichtung 15 für jede Batteriezelle 11 kann beispielsweise die Spannung und/oder die Temperatur, gegebenenfalls mit einem separaten Messelement 16, ihrer zugeordneten Batteriezellen 11 und gegebenenfalls den Strom über den Widerstand der trennbaren Leiterbahn 3 messen. Auch die Impedanz der Batteriezellen und/oder der zeitliche Verlauf der jeweiligen vorstehend genannten Messgrößen kann zur Batteriezellenüberwachung verwendet werden. Die Überwachungseinrichtung 15 identifiziert defekte Batteriezellen und kann dann ein entsprechendes Signal gegebenenfalls an eine separate Auslöseeinrichtung senden und damit die pyrotechnische Ladung 8 zünden und hierdurch die Leiterbahn 3 auf dem Bauelement 1 trennen. Die betreffende Batteriezelle 11 kann somit irreversibel von der Gesamtbatterie elektrisch abgetrennt werden. Gleichzeitig wird die Diode 13, vorzugsweise eine Schottkydiode, leitend und ermöglicht den weiteren Stromfluss in dem betreffenden Batteriestrang. Die Diode 13 kann dabei in ihrem normalen Durchlassbereich betrieben werden oder sie kann so dimensioniert sein, dass sie in diesem Fall durchlegiert und zum ohmschen Kontakt mit niedrigerem Spannungsabfall wird. Vorteilhafterweise können das erfindungsgemäße Bauelement 1 mit der pyrotechnisch trennbaren Leiterbahn 3 mit elektrischer Auslösung 4 und Schottkydiode 13 auf einem Chip integriert und/oder in einem Gehäuse 14 angeordnet sein. Da die einzelnen aus der Zusammenschaltung von Batteriezellen gebildeten Batteriestränge bei ausgefallenen Zellen nicht mehr die gleichen Spannungen besitzen, können diese über DC/DC-Wandler 17 und Dioden 18 rückwirkungsfrei parallel geschaltet werden. Die Funktion der Dioden 18 kann dabei auch bereits in den DC/DC-Wandlern 17 integriert sein.

Zusammenfassend wird erfindungsgemäß ein Bauelement bereitgestellt, mit dem auf einfache Weise eine Leiterbahn, insbesondere irreversibel, getrennt werden kann. Weiterhin wird eine Batterieanordnung, insbesondere für Elektrofahrzeuge zur Verfügung gestellt, mit der die Standzeit einer Gesamtbatterie deutlich verlängert werden kann. Gleichzeitig kann mit der erfindungsgemäßen Batterieanordnung eine Minimierung elektrischer Verluste erzielt werden.

## Patentansprüche

1. Bauelement (1), insbesondere für eine Batterieanordnung (10), umfassend mindestens eine Leiterbahn (3) auf einem Substrat (2), wobei die Leiterbahn (3) mittels einer auf oder in dem Substrat (2) angeordneten pyrotechnischen Ladung (8) und einer mit dieser pyrotechnischen Ladung (8) funktionell verbundenen Auslöseeinrichtung elektrisch trennbar ist, wobei der elektrisch trennbaren Leiterbahn (3) eine Überbrückungseinrichtung (13) zugeordnet ist, mit der eine vorher nicht vorhandene elektrische Verbindung geknüpft werden kann, **dadurch gekennzeichnet, dass** die Überbrückungseinrichtung (13) mindestens eine Diode umfasst, wobei die Diode gleichzeitig mit der elektrischen Trennung der Leiterbahn leitend werden und einen weiteren Stromfluss in einem Batteriestrang ermöglichen kann.

2. Bauelement (1) nach Anspruch 1, **dadurch gekennzeichnet, dass** die Überbrückungseinrichtung (13) mindestens eine Schottkydiode umfasst.

3. Bauelement (1) nach einem der Ansprüche 1 oder 2, **dadurch gekennzeichnet, dass** die Auslöseeinrichtung einen elektrischen Auslöser, insbesondere eine elektrische Zündladung (4), umfasst.

4. Bauelement (1) nach einem der vorhergehenden Ansprüche, **dadurch gekennzeichnet, dass** das Substrat (2) einen Chip, insbesondere ein Siliziumwafer ist.

5. Bauelement (1) nach einem der vorhergehenden Ansprüche, **dadurch gekennzeichnet, dass** die pyrotechnische Ladung (8) mindestens zwei übereinander angeordnete Stoff- oder Stoffmischungs-Schichten umfasst, wobei mindestens eine nach außen gerichtete Schicht als Sperrschicht ausgelegt ist.

6. Batterieanordnung (10), insbesondere für ein Elektrofahrzeug, umfassend mehrere Batteriezellen (11), die seriell und/oder parallel elektrisch miteinander verschaltet sind, **dadurch gekennzeichnet, dass** sie mindestens
a. eine Überwachungseinrichtung (15) zur Identifizierung defekter Batteriezellen,
b. mindestens eine Leiterbahn (3) als elektrische Verbindung einer Batteriezelle,
c. mindestens eine pyrotechnische Ladung (8) zur Trennung mindestens der elektrischen Leiterbahn (3) einer defekten Batteriezelle,
d. eine Auslöseeinrichtung für die pyrotechnische Ladung,
e. und weiterhin die Batterieanordnung (10) eine Überbrückungseinrichtung (13) für elektrisch abgetrennte defekte Batteriezellen umfasst, wobei die Überbrückungseinrichtung mindestens eine Diode umfasst, wobei die Diode gleichzeitig mit der elektrischen Trennung der Leiterbahn leitend werden und einen weiteren Stromfluss in einem Batteriestrang ermöglichen kann.

7. Batterieanordnung (10) nach Anspruch 6, **dadurch gekennzeichnet, dass** die Leiterbahn (3), die pyrotechnische Ladung (8) und die Überbrückungseinrichtung (13) auf und/oder in einem Chip und/oder Gehäuse (14) angeordnet sind.

8. Batterieanordnung (10) nach Anspruch 6 oder 7, **dadurch gekennzeichnet, dass** die Auslöseeinrichtung in der Überwachungseinrichtung (15) integriert ist.

9. Verfahren zum verbesserten Betrieb einer Batterieanordnung (10) nach einem der Ansprüche 6 bis 8, insbesondere für ein Elektrofahrzeug, umfassend mehrere Batteriezellen (11), die seriell und/oder parallel zu Batteriesträngen zusammengeschaltet sind, umfassend die Schritte:
A) Identifizierung defekter Batteriezellen (11)
B) Abtrennung der defekten Batteriezellen (11) durch Trennen mindestens einer stromtragenden Leiterbahn (3) der defekten Batteriezelle mittels Auslösung einer pyrotechnische Ladung (8),
C) Überbrückung der getrennten Leiterbahn (3) des Batteriestrangs mittels einer Überbrückungseinrichtung (13).

## Claims

1. Component (1), in particular for a battery arrangement (10), comprising at least one conductor track (3) on a substrate (2), wherein the conductor track (3) can be electrically isolated by means of a pyrotechnic charge (8) arranged on or in the substrate (2) and a trigger device functionally connected to said pyrotechnic charge (8), wherein a bypass device (13) is associated with the electrically isolatable conductor track (3), by way of which bypass device a previously absent electrical connection can be made, **characterized in that** the bypass device (13) comprises at least one diode, wherein the diode can be switched on at the same time as the electrical isolation of the conductor track and can make a further flow of current in a battery string possible.

2. Component (1) according to Claim 1, **characterized in that** the bypass device (13) comprises at least one Schottky diode.

3. Component (1) according to either of Claims 1 and 2, **characterized in that** the trigger device comprises an electrical trigger, in particular an electrical ignition charge (4).

4. Component (1) according to one of the preceding claims, **characterized in that** the substrate (2) is a chip, in particular a silicon wafer.

5. Component (1) according to one of the preceding claims, **characterized in that** the pyrotechnic charge (8) comprises at least two material or material mix layers arranged one above the other, wherein at least one layer directed towards the outside is designed as a barrier layer.

6. Battery arrangement (10), in particular for an electric vehicle, comprising a plurality of battery cells (11), which are interconnected with one another electrically in series and/or in parallel, **characterized in that** said battery arrangement comprises at least
a. one monitoring device (15) for identifying faulty battery cells,
b. at least one conductor track (3) as an electrical connection of a battery cell,
c. at least one pyrotechnic charge (8) for isolating at least the electrical conductor track (3) of a faulty battery cell,
d. a trigger device for the pyrotechnic charge,
e. and the battery arrangement (10) also comprises a bypass device (13) for electrically disconnected faulty battery cells, wherein the bypass device comprises at least one diode, wherein the diode can be switched on at the same time as the electrical isolation of the conductor track and can make a further flow of current in a battery string possible.

7. Battery arrangement (10) according to Claim 6, **characterized in that** the conductor track (3), the pyrotechnic charge (8) and the bypass device (13) are arranged on and/or in a chip and/or housing (14).

8. Battery arrangement (10) according to Claim 6 or 7, **characterized in that** the trigger device is integrated in the monitoring device (15).

9. Method for the improved operation of a battery arrangement (10) according to one of Claims 6 to 8, in particular for an electric vehicle, comprising a plurality of battery cells (11), which are interconnected in series and/or in parallel to form battery strings, comprising the steps of:
A) identification of faulty battery cells (11),
B) disconnection of the faulty battery cells (11) by isolating at least one current-carrying conductor track (3) of the faulty battery cell by means of triggering a pyrotechnic charge (8),
C) bypassing of the isolated conductor track (3) of the battery string by means of a bypass device (13).

## Revendications

1. Composant (1), destiné en particulier à un ensemble batterie (10), comprenant au moins une piste conductrice (3) sur un substrat (2), dans lequel la piste conductrice (3) peut être séparée électriquement au moyen d'une charge pyrotechnique (8) disposée sur ou dans le substrat (2) et d'un dispositif de déclenchement relié fonctionnellement à ladite charge pyrotechnique (8), dans lequel un dispositif de pontage (13) est associé à la piste conductrice (3) pouvant être séparée électriquement, auquel peut être raccordée une connexion électrique qui n'existait pas auparavant,
**caractérisé en ce que** le dispositif de pontage (13) comprend au moins une diode,
dans lequel la diode devient conductrice en même temps que la séparation électrique de la piste conductrice et peut permettre le passage d'un flux de courant supplémentaire dans un bloc-batterie.

2. Composant (1) selon la revendication 1, **caractérisé en ce que** le dispositif de pontage (13) comprend au moins une diode Schottky.

3. Composant (1) selon l'une des revendications 1 ou 2, **caractérisé en ce que** le dispositif de déclenchement comprend un déclencheur électrique, en particulier une charge d'allumage électrique (4).

4. Composant (1) selon l'une des revendications précédentes, **caractérisé en ce que** le substrat (2) est une puce, en particulier une plaquette de silicium.

5. Composant (1) selon l'une des revendications précédentes, **caractérisé en ce que** la charge pyrotechnique (8) comprend au moins deux couches de matériau ou de mélange de matériaux disposées l'une sur l'autre, dans lequel au moins une couche dirigée vers l'extérieur est réalisée sous la forme d'une couche d'arrêt.

6. Ensemble batterie (10), destiné en particulier à un véhicule électrique, comprenant une pluralité d'éléments de batterie (11) qui sont raccordés électriquement les uns aux autres en série et/ou en parallèle, **caractérisé en ce qu'**il comprend au moins
a. un dispositif de surveillance (15) destiné à identifier des éléments de batterie défectueux,
b. au moins une piste conductrice (3) en tant que connexion électrique d'un élément de batterie,
c. au moins une charge pyrotechnique (8) destinée à séparer au moins la piste conductrice électrique (3) d'un élément de batterie défectueux,
d. un dispositif de déclenchement de la charge pyrotechnique,
e. et ledit ensemble batterie (10) comprend en outre un dispositif de pontage (13) destiné à des éléments de batterie défectueux électriquement séparés, dans lequel le dispositif de pontage comprend au moins une diode, dans lequel la diode peut devenir conductrice en même temps que la séparation électrique de la piste conductrice et peut permettre le passage d'un flux de courant supplémentaire dans un bloc-batterie.

7. Ensemble batterie (10) selon la revendication 6, **caractérisé en ce que** la piste conductrice (3), la charge pyrotechnique (8) et le dispositif de pontage (13) sont disposés sur et/ou dans une puce et/ou un boîtier (14).

8. Ensemble batterie (10) selon la revendication 6 ou 7, **caractérisé en ce que** le dispositif de déclenchement est intégré dans le dispositif de surveillance (15).

9. Procédé destiné à améliorer le fonctionnement d'un ensemble batterie (10) selon l'une des revendications 6 à 8, destiné en particulier à un véhicule électrique, comprenant plusieurs éléments de batterie (11) qui sont raccordés en série et/ou en parallèle aux blocs-batteries, comprenant les étapes consistant à :
A) identifier des éléments de batterie défectueux (11),
B) séparer les éléments de batterie défectueux (11) par séparation d'au moins une piste conductrice de courant (3) de l'élément de batterie défectueux par déclenchement d'une charge pyrotechnique (8),
C) ponter la piste conductrice séparée (3) du bloc-batterie au moyen d'un dispositif de pontage (13).
